# EUROPÄISCHE PATENTSCHRIFT

(11) **EP 2 364 890 B1**
(45) Veröffentlichungstag und Bekanntmachung des Hinweises auf die Patenterteilung: **21.03.2012**
(21) Anmeldenummer: 11001357.0
(22) Anmeldetag: 18.02.2011
(51) Int. Cl.: B60T 7/20, B60T 11/10, B60T 15/22, B60T 15/60, B60T 17/18

(54) **Sicherheitseinrichtung für Anhänger**
Safety device for trailers
Dispositif de sécurité pour remorques

(30) Priorität: 10.03.2010 DE 102010010836
(43) Veröffentlichungstag der Anmeldung: 14.09.2011
(73) Patentinhaber: HYDAC Accessories GmbH, 66280 Sulzbach/Saar (DE)
(72) Erfinder: Michel, Bernd, 66578 Schiffweiler (DE); Hiss, Helmut, 75228 Ispringen (DE)
(74) Vertreter: Bartels & Partner

(56) Entgegenhaltungen:
- EP-A2- 1 031 486
- DE-A1- 3 008 067
- FR-A1- 2 501 604
- GB-A- 698 319
- US-A- 2 834 437

## Beschreibung

Die Erfindung betrifft eine Sicherheitseinrichtung für Anhänger von vorzugsweise landwirtschaftlich nutzbaren Zugfahrzeugen, die mit einem hydraulisch betätigbaren Bremssystem versehen sind, mit einer Steuereinheit, die einen Versorgungseingang für vom Zugfahrzeug mit Bremsdruck zuzuführendem Druckfluid, einen Bremsausgang in Verbindung mit zumindest einem Bremszylinder des Anhängers, einen Hydrospeicher und eine schaltbare Ventilanordnung aufweist, die aus einem ersten Schaltzustand, in dem sie den Versorgungseingang mit dem Bremsausgang verbindet, mittels eines Zuggliedes, das bei Vergrößerung des Abstandes zwischen Zugfahrzeug und Anhänger spannbar ist, in einen zweiten Schaltzustand bringbar ist, in dem sie die Verbindung vom Bremsausgang zum Versorgungseingang hin unterbindet und den Hydrospeicher mit dem Bremsausgang verbindet.

Sicherheitseinrichtungen dieser Art sind bekannt. Die französische Patentveröffentlichung 2 501 604 offenbart eine derartige Einrichtung für das Auslösen einer Notbremsung des Anhängers eines landwirtschaftlichen Traktors bei Auftreten eines Störfalles, bei dem sich der Abstand zwischen Zugfahrzeug und Anhänger vergrößert, etwa im Falle des Lösens der Anhängerkupplung. Durch Straffen eines Zuggliedes, beispielsweise in Form einer das Zugfahrzeug mit dem Anhänger verbindenden Sicherheits-Gliederkette, wird die Sicherheitseinrichtung aktiviert, wobei der mit Druckfluid vorgespannte Hydrospeicher dem Bremssystem des Anhängers zugeschaltet wird und dieses mit Bremsdruck versorgt. Der Anhänger verbleibt somit in gebremstem Zustand, selbst wenn es zu einem Abreißen des zum Zugfahrzeug führenden Bremsschlauches und des Zuggliedes kommt, das zuvor den Umschaltvorgang eingeleitet hat.

Beim Stand der Technik sind die bei der Steuereinheit benutzten Ventile als Schieberventile ausgebildet. Da derartige Ventile konstruktionsbedingt mit einer Leckage behaftet sind, kommt es zu einem Absinken des vom Hydrospeicher zur Verfügung gestellten Bremsdruckes und damit nach gewisser Zeit zu einem Verlust der Bremswirkung mit entsprechender Gefährdung durch den nunmehr ungesicherten Anhänger.

Im Hinblick auf diese Problematik stellt sich die Erfindung die Aufgabe, eine Sicherheitseinrichtung zur Verfügung zu stellen, die demgegenüber eine erhöhte Betriebssicherheit bietet.

Erfindungsgemäß ist diese Aufgabe durch eine Sicherheitseinrichtung gelöst, die die Merkmale des Patentanspruches 1 in seiner Gesamtheit aufweist.

Entsprechend dem kennzeichnenden Teil des Anspruches 1 besteht eine wesentliche Besonderheit der Erfindung darin, dass anstelle von Schieberventilen in der Ventilanordnung Kugelhähne vorgesehen sind, die mechanisch miteinander gekoppelt sind, wobei ein Kugelhahn die Verbindung zwischen Versorgungseingang und Bremsausgang der Steuereinheit und der zweite Kugelhahn die Verbindung zwischen Bremsausgang und Hydrospeicher steuert und wobei die Kugelhähne zum Auslösen einer Notbremsung durch Anspannen des Zuggliedes gegen eine angreifende Vorspannung drehbetätigt sind. Da bei Kugelhähnen die Schaltkugel in ihrem Sitz bei geschlossenem Kugelhahn leckagefrei sitzt, besteht keine Gefahr des Druckabbaues, so dass der Anhänger nach Auslösung einer Notbremsung im gesicherten Zustand verbleibt. Dadurch, dass darüber hinaus erfindungsgemäß zumindest der dem Hydrospeicher zugeordnete zweite Kugelhahn mit einem Rückschlagventil versehen ist, das für einen Fluidstrom vom Bremsausgang zum Hydrospeicher hin druckbetätigbar ist, ist sichergestellt, dass der Hydrospeicher während des Normalbetriebes über den vom Zugfahrzeug zum Versorgungsanschluss der Steuereinheit führenden Bremsschlauch aufgeladen wird und dadurch sichergestellt ist, dass für eine Notbremsung der Bremsdruck zur Verfügung steht.

Vorzugsweise ist auch der erste Kugelhahn mit einem Rückschlagventil versehen, das bei der zweiten Schaltposition für einen Fluidstrom vom Versorgungseingang zum Bremsausgang hin druckbetätigbar ist. Dadurch kann, auch wenn die Sicherheitseinrichtung ausgelöst und der Anhänger durch den vom Hydrospeicher gelieferten Bremsdruck gebremst ist, der Hydrospeicher über den Bremsschlauch vom Zugfahrzeug her aufgeladen werden, beispielsweise für eine anfängliche Inbetriebnahme des Anhängers, etwa nach Wartungsarbeiten mit entleerter Bremsanlage.

Bei besonders bevorzugten Ausführungsbeispielen sind Kugelhähne vorgesehen, bei denen zur Bildung eines integrierten Rückschlagventils die Schaltkugel gegen eine Federkraft aus ihrer an einem Sitz anliegenden Schließposition abhebbar ist. Dadurch, dass die Schaltkugel der Kugelhähne nicht nur die leckagefreie Sperrfunktion übernimmt, sondern auch eine gesteuerte Rückströmung ermöglicht, verringern sich die Anzahl der Funktionskomponenten und damit der Schaltungsaufwand der Steuereinrichtung, was wiederum eine besonders kompakte Bauweise ermöglicht.

Um die Kugelhähne in die dem ersten Schaltzustand entsprechende Schaltposition vorzuspannen, kann zumindest eine Spiralfeder vorgesehen sein, die die Spindel des betreffenden Kugelhahnes umgibt und die Spindel mit Drehmoment beaufschlagt. Mit geringem erforderlichen Bauraum ist dadurch ein Drehmoment ausreichender Stärke erreichbar. Aufgrund der kompakten Bauweise lassen sich ohne Schwierigkeiten an jedem der beiden Kugelhähne eine Spiralfeder anordnen.

Mit besonderem Vorteil kann die Anordnung so getroffen sein, dass die Kugelhähne mit zueinander koaxialer Spindel und einen Abstand zwischen sich freilassend angeordnet sind und dass innerhalb dieses Abstandes ein Betätigungshebel mit beiden Spindeln drehfest verbunden ist, an dessen freiem Ende das Zugglied angreift.

Hinsichtlich der Gestaltung einer Einrichtung zum lösbaren Verrasten der in der zweiten Schaltposition befindlichen Kugelhähne kann die Anordnung mit Vorteil so getroffen sein, dass am Betätigungshebel eine Raste und ein dieser zugeordnetes, zum Einfallen in die Raste vorgespanntes Riegelglied vorgesehen sind, das an einem Träger der Kugelhähne gelagert und zum Lösen der Verrastung manuell aus der Raste aushebbar ist. Dadurch bleibt der durch die Sicherheitseinrichtung gebremste Anhänger so lange im gebremsten, gesicherten Zustand, bis die Verrastung des Betätigungshebels gelöst wird. Somit kann bei Bedarf der Anhänger auch ohne Verbindung zum Zugfahrzeug gehandhabt werden. Durch manuelles Betätigen des Betätigungshebels und Wiederherstellen der Verrastung ist der Anhänger wiederum in den gebremsten Zustand überführbar. Die Sicherheitseinrichtung kann somit in Zusatzfunktion auch eine mechanische Handbremse des Anhängers unterstützen oder ersetzen, zumal die letztgenannten Vorgänge, ohne Verbindung zum Zugfahrzeug, mehrfach wiederholt werden können, da dank der ohne Leckageverlust arbeitenden Ventilanordnung gespeicherte Bremsenergie im Hydrospeicher zur Verfügung steht.

Nachstehend ist die Erfindung anhand eines in der Zeichnung dargestellten Ausführungsbeispieles im Einzelnen erläutert. Es zeigen:
- Fig. 1: eine perspektivische Schrägansicht der Steuereinheit eines Ausführungsbeispieles der erfindungsgemäßen Sicherheitsein- richtung, dargestellt im ersten Schaltzustand, wobei ein zuge- höriger Hydrospeicher nicht dargestellt ist;
- Fig. 2: eine der Fig. 1 entsprechende Ansicht, wobei jedoch der zweite Schaltzustand dargestellt ist;
- Fig. 3: eine Symboldarstellung der hydraulischen Schaltung der Steuereinheit;
- Fig. 4: eine vergrößert gezeichnete Draufsicht eines Kugelhahnes der Steuereinheit;
- Fig. 5: eine der Fig. 4 ähnliche, jedoch demgegenüber in kleinerem Maßstab gezeichnete Draufsicht eines Kugelhahnes ohne die in Fig. 4 gezeigte Spiralfeder;
- Fig. 6: eine teils in Seitenansicht teils entsprechend der Schnittlinie VI-VI von Fig. 5 geschnitten gezeichnete Darstellung des Ku- gelhahnes, wobei die Offenstellung des Hahnes dargestellt ist, und
- Fig. 7: eine der Fig. 6 ähnliche Darstellung, ohne Spiralfeder und wobei die Schaltkugel gegenüber Fig. 6 um 90° Grad ver- dreht ist.

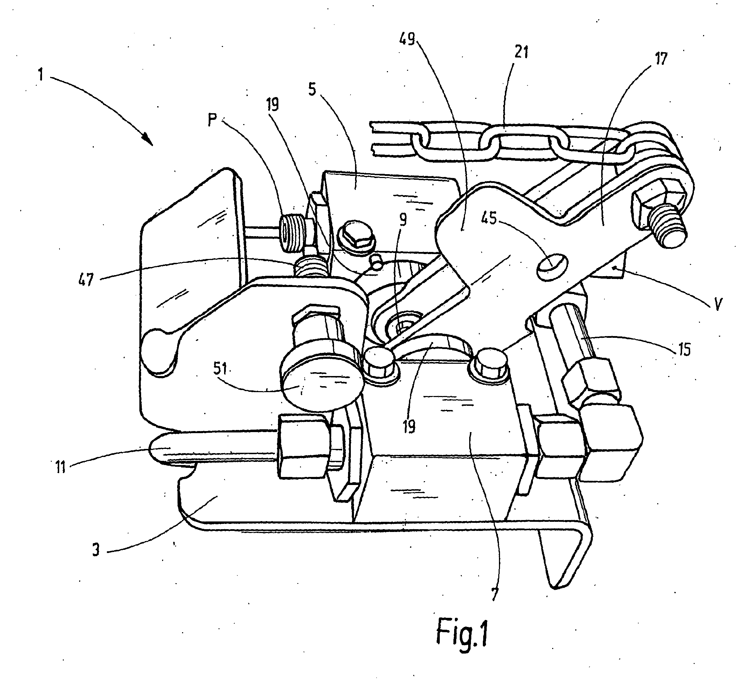

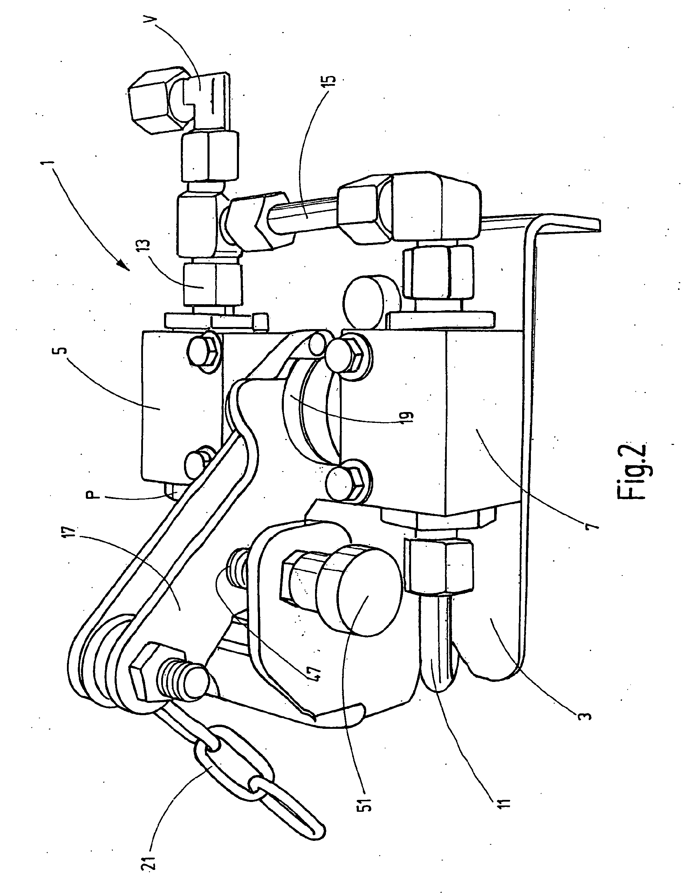

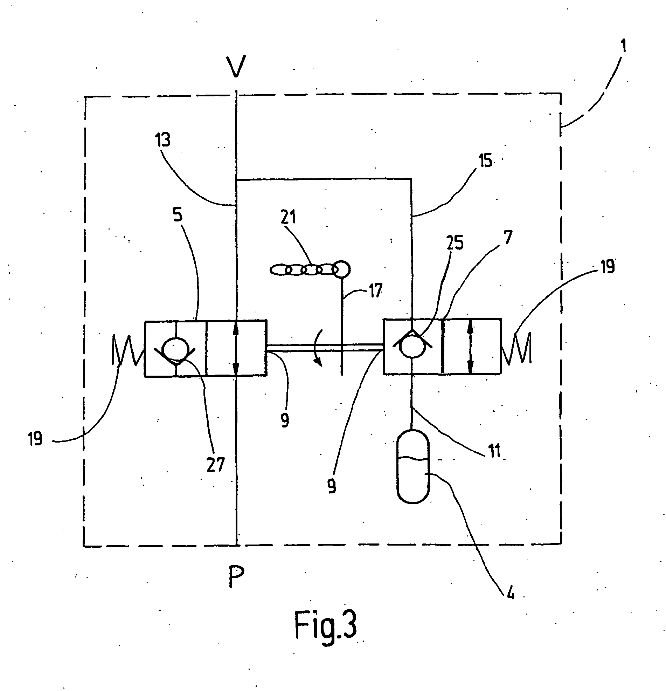

Gemäß Fig. 1 und 2 weist die Steuereinheit 1 der Sicherheitseinrichtung auf einem Geräteträger 3 zwei Kugelhähne 5 und 7 auf, die in Tandemanordnung mit koaxialen und einander zugekehrten Drehspindeln 9 in einem Abstand voneinander angeordnet sind. Ein unterhalb des Trägers 3 befindlicher Hydrospeicher 4 (Fig. 3), beim Ausführungsbeispiel in Form eines Blasenspeichers (0,75 I/60 Bar), der in Fig. 1 und 2 nicht sichtbar ist, ist über eine Leitung 11 mit dem Kugelhahn 7 verbunden. Die Fig. 3 verdeutlicht die hydraulische Schaltung der Steuereinheit 1 mit einem Versorgungseingang P in Verbindung mit dem Kugelhahn 5, einer Leitung 13 zu einem Bremsausgang V und einer Leitung 15 vom Bremsausgang V zum zweiten Kugelhahn 7 und der Leitung 11.

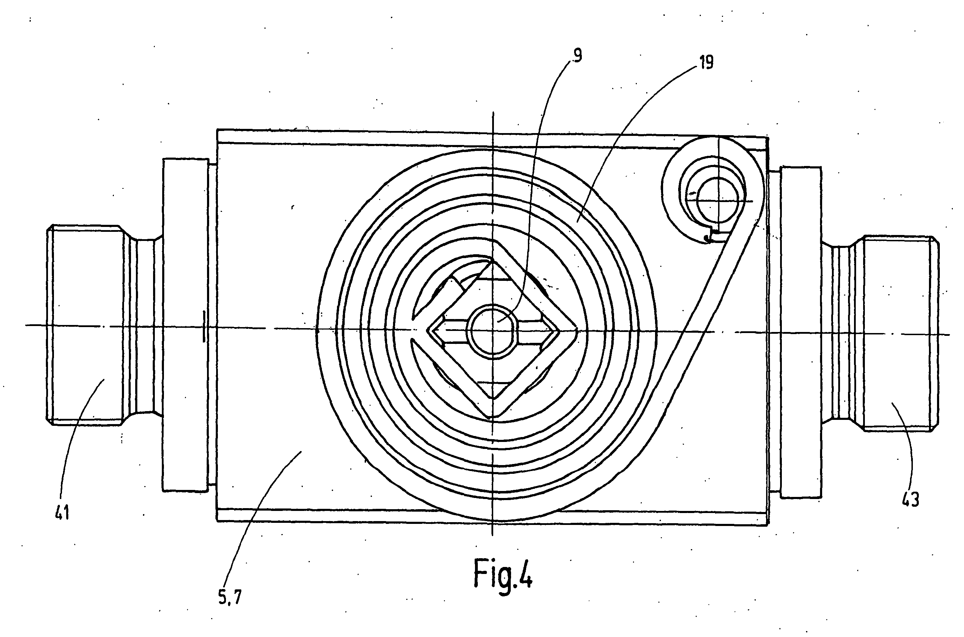

Die Spindeln 9 der Kugelhähne 5 und 7 sind mittels eines Betätigungshebels 17 miteinander auf Drehung verbunden, der als Doppelhebel ausgebildet und in Fig. 1 in der dem ersten Schaltzustand der Steuereinheit entsprechenden Schwenkstellung und in Fig. 2 in der dem zweiten Schaltzustand entsprechenden Stellung dargestellt ist, bei der eine Notbremsung ausgelöst ist. Die Kugelhähne 5 und 7 sind in die in Fig. 1 gezeigte Drehstellung vorgespannt, und zwar mittels Spiralfedern 19. Diese sind, wie am deutlichsten aus Fig. 4 zu ersehen ist, am Austrittsende der jeweiligen Spindel 9 derart um sie gewunden, dass ein Drehmoment an den Spindeln wirkt, die den Betätigungshebel 17 in die in Fig. 1 dargestellte Schwenklage vorspannt. Ein am freien Ende des Betätigungshebels 17 angebrachtes Zugglied 21 in Form einer Gliederkette, die am (nicht gezeigten) Zugfahrzeug verankert ist, schwenkt den Betätigungshebel 17 gegen die Vorspannung in die in Fig. 2 gezeigte Schwenkposition, wenn sich das Zugglied 21 bei Vergrößerung des Abstandes zum Zugfahrzeug anspannt und bringt die Spindeln 9 der Kugelhähne 5, 7 in die Schaltposition, die dem zweiten Schaltzustand (Notbremsung) entspricht.

Bei der Darstellung von Fig. 3 befindet sich die Steuereinheit 1 in dem ersten Schaltzustand, entsprechend dem normalen Fahrbetrieb, bei dem über den nicht dargestellten Bremsschlauch vom Zugfahrzeug her Bremsdruck vom Versorgungseingang P her über den in Offenstellung befindlichen Kugelhahn 5 zum Bremsausgang V und damit zur Bremsanlage des Anhängers weiterleitbar ist. Gleichzeitig ist durch den in der Sperrstellung befindlichen Kugelhahn 7 der Abfluss von Druckfluid aus dem Hydrospeicher 4 gesperrt.

Wie bereits erwähnt, bildet der Kugelhahn 7 jedoch bei der Sperrstellung ein Rückschlagventil 25, das, wenn der Druck am Bremsausgang V (Leitungen 13 und 15) höher ist als der Druck im Hydrospeicher 4, druckbetätigbar ist, um den Hydrospeicher 4 zu laden.

Wird durch Spannen des Zuggliedes 21 die Steuereinheit 1 in den zweiten Schaltzustand überführt, unterbindet der Kugelhahn 5 die Verbindung vom Versorgungseingang P zur Leitung 13 und damit zum Bremsausgang V. Gleichzeitig verbindet der zweite Kugelhahn 7 den Hydrospeicher 4 über die Leitung 15 mit dem Bremsausgang V, so dass der Anhänger durch Notbremsung gesichert ist. Wenn bei diesem Zustand der Bremsschlauch, der vom Zugfahrzeug zum Versorgungseingang P der Steuereinheit 1 führt, nicht abgerissen ist, kann über das dem Kugelhahn 5 zugeordnete weitere Rückschlagventil 27 auch bei geschlossenem Kugelhahn 5 der Hydrospeicher 4 vom Zugfahrzeug her nachgeladen oder aufgeladen werden, beispielsweise, um eine anfängliche Inbetriebnahme des Anhängers nach Wartungsarbeiten vorzunehmen, selbst wenn sich die Sicherheitseinrichtung im aktivierten Zustand befindet.

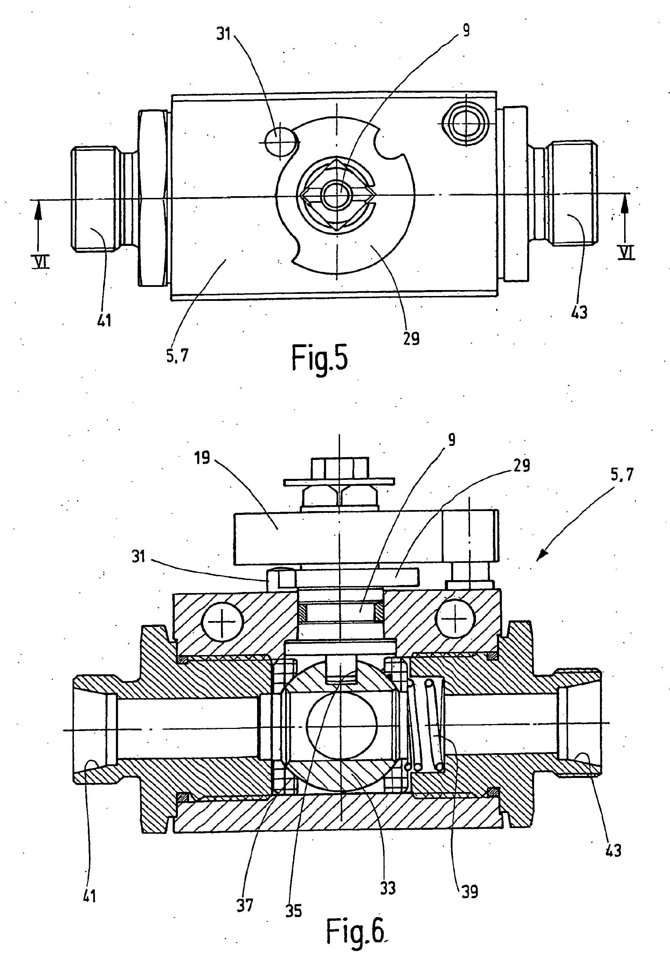

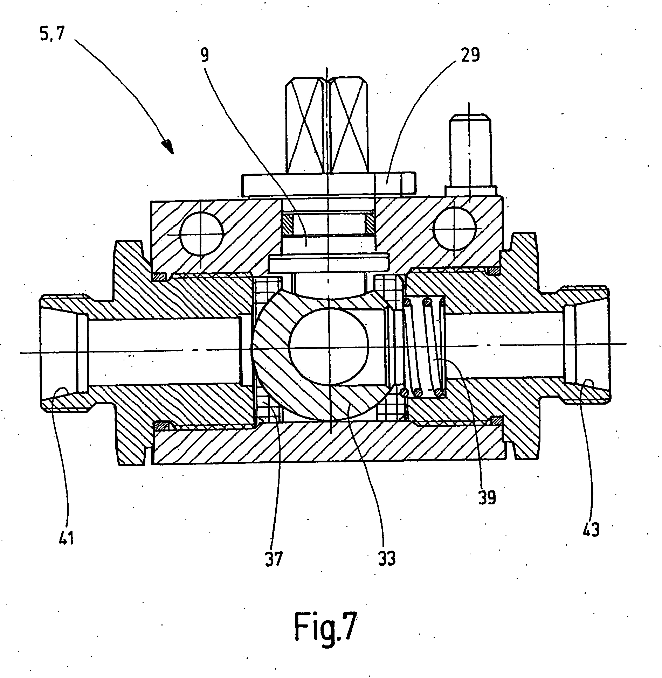

Die Fig. 5 bis 7 verdeutlichen die Bauweise der Kugelhähne 5, 7, die mit einem integrierten Rückschlagventil 25, 27 versehen sind. Dabei zeigt die Fig. 5 die Seite des Austrittes der Spindel 9 ohne die zugehörige, in Fig. 4 sichtbare Spiralfeder 19, so dass in Fig. 5 die unter der Spiralfeder 19 liegende Drehbegrenzung sichtbar ist, die aus mit der Spindel 9 verbundener Begrenzerscheibe 29 und Anschlag 31 besteht. Um innerhalb des Kugelhahnes 5, 7 jeweils ein integriertes Rückschlagventil zu bilden, ist die Schaltkugel 33 mit der Spindel 9 nicht starr verbunden, sondern von der Spindel 9 über einen Mitnehmerschlitz 35 (Fig. 6) drehbar. Bei der in Fig. 7 gezeigten Schließstellung ist daher die Schaltkugel 33 von ihrem Sitz 37, an dem sie bei der Schließstellung leckagefrei dichtend anliegt, gegen die Wirkung einer Ventilfeder 39 abhebbar, so dass ein druckbetätigbares Rückschlagventil gebildet ist, das für einen Durchstrom vom Anschluss 41 zum Anschluss 43 hin druckbetätigbar ist.

Fig. 1 und 2 zeigen eine Rasteinrichtung zur lösbaren Verrastung des Betätigungshebels 17 in der dem zweiten Schaltzustand entsprechenden Schwenkstellung. Die Rasteinrichtung weist im Hebel 17 eine Raste in Form einer Bohrung 45 und am Geräteträger 3 ein Riegelglied 47 auf, das durch eine nicht dargestellte Feder in die vorgeschobene Riegelstellung vorgespannt ist, aus der es gegen die Federkraft durch eine Handhabe 51 manuell zurückziehbar ist. Am Betätigungshebel 17 befindet sich eine leicht schräg verlaufende Steuerfläche 49, an der die Spitze des Riegelgliedes 47 bei Schwenken des Hebels 17 in Fig. 1 und 2 nach links anläuft, bis das Riegelglied 47 in die Bohrung 45 einfällt und dadurch den Hebel 17 in der in Fig. 2 gezeigten Stellung verrastet, die dem zweiten Schaltzustand entspricht. Bei Zurückziehen des Riegelgliedes 47 mittels der Handhabe 51 schwenkt der Hebel 17 in die in Fig. 1 gezeigte Schwenkstellung unter Einfluss der ein Drehmoment erzeugenden Spiralfeder 19 zurück.

## Patentansprüche

1. Sicherheitseinrichtung für Anhänger von vorzugsweise landwirtschaftlich nutzbaren Zugfahrzeugen, die mit einem hydraulisch betätigbaren Bremssystem versehen sind, mit einer Steuereinheit (1), die einen Versorgungseingang (P) für vom Zugfahrzeug mit Bremsdruck zuzuführendem Druckfluid, einen Bremsausgang (V) in Verbindung mit zumindest einem Bremszylinder des Anhängers, einen Hydrospeicher (4) und eine schaltbare Ventilanordnung (5, 7) aufweist, die aus einem ersten Schaltzustand, in dem sie den Versorgungseingang (P) mit dem Bremsausgang (V) verbindet, mittels eines Zuggliedes (21), das bei Vergrößerung des Abstandes zwischen Zugfahrzeug und Anhänger spannbar ist, in einen zweiten Schaltzustand bringbar ist, in dem sie die Verbindung vom Bremsausgang (V) zum Versorgungseingang (P) hin unterbindet und den Hydrospeicher (4) mit dem Bremsausgang (V) verbindet, **dadurch gekennzeichnet, dass** die Ventilanordnung zwei mechanisch gekoppelte Kugelhähne (5, 7) aufweist, die durch das Spannen des Zuggliedes (21) gegen an ihnen wirksame Vorspannung aus ihrer dem ersten Schaltzustand entsprechenden ersten Schaltposition in die andere, zweite Schaltposition drehbetätigbar sind, dass der eine Kugelhahn (5) die Verbindung zwischen Versorgungseingang (P) und Bremsausgang (V) und der zweite Kugelhahn (7) die Verbindung zwischen Bremsausgang (V) und Hydrospeicher (4) steuert, und dass zumindest der zweite Kugelhahn (7) mit einem Rückschlagventil (25) versehen ist, das für einen Fluidstrom vom Bremsausgang (V) zum Hydrospeicher (4) hin druckbetätigbar ist.

2. Sicherheitssystem nach Anspruch 1, **dadurch gekennzeichnet, dass** auch der erste Kugelhahn (5) mit einem Rückschlagventil (27) versehen ist, das bei der zweiten Schaltposition für einen Fluidstrom vom Versorgungseingang (P) zum Bremsausgang (V) hin druckbetätigbar ist.

3. Sicherheitseinrichtung nach Anspruch 1 oder 2, **dadurch gekennzeichnet, dass** Kugelhähne (5, 7) vorgesehen sind, bei denen zur Bildung eines integrierten Rückschlagventils (25, 27) die Schaltkugel (33) gegen eine Federkraft (39) aus ihrer an einem Sitz (37) anliegenden Schließposition abhebbar ist.

4. Sicherheitseinrichtung nach einem der Ansprüche 1 bis 3, **dadurch gekennzeichnet, dass** eine Einrichtung (45, 47) zum lösbaren Verrasten der in die zweite Schaltposition drehbetätigten Kugelhähne (5, 7) vorgesehen ist.

5. Sicherheitseinrichtung nach einem der Ansprüche 1 bis 4, **dadurch gekennzeichnet, dass** zum Erzeugen der Vorspannung, die die Kugelhähne (5, 7) in die dem ersten Schaltzustand entsprechende Schaltposition vorspannt, zumindest eine Spiralfeder (19) vorgesehen ist, die die Spindel (9) des betreffenden Kugelhahnes (5, 7) umgibt und die Spindel (9) mit Drehmoment beaufschlagt.

6. Sicherheitseinrichtung nach einem der Ansprüche 1 bis 5, **dadurch gekennzeichnet, dass** die Kugelhähne (5, 7) mit zueinander koaxialen Spindeln (9) und einen Abstand zwischen sich freilassend angeordnet sind und dass innerhalb dieses Abstandes ein Betätigungshebel (17) mit beiden Spindeln (9) drehfest verbunden ist, an dessen freiem Ende das Zugglied (21) angreift.

7. Sicherheitseinrichtung nach Anspruch 6, **dadurch gekennzeichnet, dass** die Einrichtung zum lösbaren Verrasten der Kugelhähne (5, 7) am Betätigungshebel (17) eine Raste (45) und ein dieser zugeordnetes, zum Einfallen in die Raste (45) vorgespanntes Riegelglied (47) aufweist, das an einem Träger (3) der Kugelhähne (5, 7) gelagert und zum Lösen der Verrastung manuell aus der Raste (45) aushebbar ist.

## Claims

1. A safety device for trailers preferably of towing vehicles that can be used in agriculture, which are provided with a hydraulically operable braking system, comprising a control unit (1) which has a supply input (P) for pressurised fluid to be delivered by the towing vehicle with braking pressure, a brake output (V) in association with at least one brake cylinder of the trailer, a hydraulic accumulator (4) and a switchable valve arrangement (5, 7) which can be brought from a first switching state, in which it connects the supply input (P) to the brake output (V) by means of a traction member (21) that can be tensioned by increasing the distance between the towing vehicle and the trailer, into a second switching state in which it prevents the connection of the brake output (V) to the supply input (P) and connects the hydraulic accumulator (4) to the brake output (V), **characterised in that** the valve arrangement has two mechanically coupled ball valves (5, 7) that can be swivel-actuated by clamping the traction member (21) against pre-tensioning acting on it from its first switching position corresponding to the first switching state into the other, second switching position, that the one ball valve (5) controls the connection between the supply input (P) and the brake output (V) and the second ball valve (7) the connection between the brake output (V) and the hydraulic accumulator (4), and that at least the second ball valve (V) is provided with a return valve (25) that is pressure operable for a fluid flow from the brake output (V) to the hydraulic accumulator (4).

2. The safety system according to Claim 1, **characterised in that** the first ball valve (5) is also provided with a return valve (27) that is pressure operable for a fluid flow from the supply input (P) to the brake output (V) in the second switching position.

3. The safety device according to Claim 1 or 2, **characterised in that** ball valves (5, 7) are provided with which, in order to form an integrated return valve (25, 27), the switching ball (33) can be raised against a spring force (39) from its closed position resting against a seat (37).

4. The safety device according to any of Claims 1 to 3, **characterised in that** a device (45, 47) is provided for detachably snapping into place the ball valves (5, 7) that can be swivel-operated into the second switching position.

5. The safety device according to any of Claims 1 to 4, **characterised in that** in order to generate the pre-tensioning which pre-tensions the ball valves (5, 7) into the switching position corresponding to the first switching state, at least one spiral spring (19) is provided which surrounds the spindle (9) of the ball valve (5, 7) in question, and subjects the spindle (9) to torque.

6. The safety device according to any of Claims 1 to 5, **characterised in that** the ball valves (5, 7) are arranged with spindles (9) coaxial to one another and leaving a space between them, and that within this space an operating lever (17) is connected, torque proof, to both spindles (9) the free ends of which the tension member (21) affects.

7. The safety device according to Claim 6, **characterised in that** the device for releaseably snapping into place the ball valves (5, 7) on the operating lever (17) has a detent (45) and a pre-tensioned bar member (47) assigned to the latter for dropping into the detent (45), that is mounted on a carrier (3) of the ball valves (5, 7) and can be raised in order to release the catch mechanism manually from the detent (45).

## Revendications

1. Dispositif de sécurité pour des remorques de véhicules de traction pouvant être utilisés, de préférence, en agriculture, qui sont pourvus d'un système de freinage pouvant être actionné hydrauliquement, comprenant une unité (1) de commande, qui a une entrée (P) d'alimentation en un fluide sous pression à envoyer avec une pression de freinage par le véhicule de traction, une sortie (V) de frein en liaison avec au moins un cylindre de frein de la remorque, un accumulateur (4) hydraulique et un agencement (5, 7) de vanne commutable, qui peut passer d'un premier état de commutation, dans lequel il met l'entrée (P) d'alimentation en communication avec la sortie (V) de frein, au moyen d'un élément (21) de traction, qui peut être tendu lorsque la distance entre le véhicule de traction et la remorque augmente, à un deuxième état de commutation, dans lequel il supprime la liaison allant de la sortie (V) de frein à l'entrée (P) d'alimentation et met l'accumulateur (4) hydraulique en communication avec la sortie (V) de frein, **caractérisé en ce que** l'agencement de vanne comporte deux robinets (5, 7) à bille, qui sont couplés mécaniquement et qui, par la tension de l'élément (21) de traction, peuvent être actionnés en rotation à l'encontre d'une précontrainte agissant sur eux, pour passer de leur première position de commutation, correspondante au premier état de commutation, à la deuxième autre position de commutation, **en ce que** l'un des robinets (5) à bille règle la communication entre l'entrée (P) d'alimentation et la sortie (V) de frein et le deuxième robinet (7) à bille règle la communication entre la sortie (V) de frein et l'accumulateur (4) hydraulique et **en ce qu'**au moins le deuxième robinet (7) à bille est pourvu d'un clapet anti-retour (25), qui peut être actionné par pression pour un courant de fluide allant de la sortie (V) de frein à l'accumulateur (4) hydraulique.

2. Système de sécurité suivant la revendication 1, **caractérisé en ce que** le premier robinet (5) à bille est pourvu aussi d'un clapet anti-retour (27), qui dans la deuxième position de commutation peut être actionné par pression pour un courant de fluide allant de l'entrée (P) d'alimentation à la sortie (V) de frein.

3. Système de sécurité suivant la revendication 1 ou 2, **caractérisé en ce qu'**il est prévu des robinets (5, 7) à bille, dans lesquels, pour la formation d'un clapet anti-retour (25, 27) intégré, la bille (33) peut, à l'encontre d'une force (39) de ressort, être soulevée de sa position de fermeture l'appliquant à un siège (37).

4. Système de sécurité suivant l'une des revendications 1 à 3, **caractérisé en ce qu'**il est prévu un dispositif (45, 47) d'encliquetage amovible des robinets (5, 7) à bille, actionné en rotation dans la deuxième position de commutation.

5. Système de sécurité suivant l'une des revendications 1 à 4, **caractérisé en ce que**, pour obtenir la précontrainte qui précontraint les robinets (5, 7) à bille dans la position de commutation correspondant au premier état de commutation, il est prévu au moins un ressort (19) spirale, qui entoure la broche (9) du robinet (5, 7) à bille concerné et qui applique un couple de rotation à la broche (9).

6. Système de sécurité suivant l'une des revendications 1 à 5, **caractérisé en ce que** les robinets (5, 7) à bille sont disposés en ayant leurs broches (9) coaxiales l'une par rapport à l'autre et en laissant entre elles une distance et **en ce que** dans cette distance un levier (17) d'actionnement est solidaire en rotation des deux broches (9), levier dont l'extrémité libre est attaquée par l'élément (21) de traction.

7. Système de sécurité suivant la revendication 6, **caractérisé en ce que** le dispositif d'encliquetage amovible des robinets (5, 7) à bille comporte sur le levier (17) d'actionnement un cran (45) et un élément (47) de verrouillage, qui est associé à celui-ci, qui est précontraint pour tomber dans le cran (45), qui est monté sur un support (3) des robinets (5, 7) à bille et qui peut être soulevé manuellement du cran (45) pour le désencliquetage.
